Europäisches Patentamt

European Patent Office

Office européen des brevets

(11) Publication number: **0 119 094**
**B1**

# (12) EUROPEAN PATENT SPECIFICATION

(45) Date of publication of patent specification: **05.12.90**

(21) Application number: **84301689.0**

(22) Date of filing: **13.03.84**

(51) Int. Cl.⁵: **C 22 B 7/00, C 22 B 21/00**

(54) Metal scrap reclamation system.

(30) Priority: **14.03.83 US 475310**

(43) Date of publication of application:
**19.09.84 Bulletin 84/38**

(45) Publication of the grant of the patent:
**05.12.90 Bulletin 90/49**

(84) Designated Contracting States:
**FR GB NL**

(56) References cited:
**WO-A-83/02958**
**US-A-3 997 336**
**US-A-4 128 415**
**US-A-4 322 245**
**US-A-4 386 764**

(73) Proprietor: **ALUMINUM COMPANY OF AMERICA**
**1501 Alcoa Building Mellon Square**
**Pittsburgh, PA 15219 (US)**

(72) Inventor: **Ormesher, Robert J.**
**R.D. 3, Box 155**
**Leechburg Pennsylvania (US)**

(74) Representative: **Baillie, Iain Cameron et al**
**c/o Ladas & Parry Isartorplatz 5**
**D-8000 München 2 (DE)**

Courier Press, Leamington Spa, England.

EP 0 119 094 B1

## Description

This invention relates to a method for quickly and efficiently melting metal scrap in a recirculating melting system.

Increased effort is being placed on finding cheaper methods to recycle metal scrap, particularly in the light metals field. This effort is being expended because of the national and international concern over depletion of raw material sources for these metals.

Recycling systems for metal scrap are normally required to be at least competitive with established manufacturing systems for producing such metal. To be competitive, such recycling systems must be efficient which can often require that they be designed to reclaim certain or specific kinds of metal scrap. With respect to the kinds of metal scrap encountered in the light metals field, particularly aluminum, it should be observed that it can range from scrap generated very early in the manufacturing process to that resulting from used products, e.g. metal containers. Scrap generated early in the manufacturing of aluminum, for example, is scalping chips. These chips result from preparing the surface of an aluminum ingot for rolling or cladding or some such purpose when often large irregularities are removed. Chips removed at this time can constitute as much as 6% of the total metal in the ingot and, therefore, obviously can amount to a considerable amount of metal which can be recycled. Scrap typical of used metal containers which can be beneficial to recycle is metal beverage cans and the like. Recycling such cans serves to conserve resources and also to provide a cleaner environment.

These two types of scrap are often considered to present different problems from the standpoint of reclamation. For example, container or can scrap normally comprises bits and pieces of metal which can range in size from relatively small particles to crushed cans. Often, the cans can have holes pierced in them for purposes of delacquering using solvents. The pierced holes, while aiding the flow of solvent through the mass of cans, result in jagged edges which, together with the generally non-uniform shapes and sizes of crushed cans, make this scrap relatively non-flowable. Furthermore, such scrap tends to be rather buoyant with respect to the melting media, requiring special equipment to forcibly submerge it. A particular type of equipment for handling this type of scrap is disclosed in U.S. Patent 3,873,305 where a rotating wedge forcibly submerges this type of scrap into the melting media. In the system described in this Patent, additional equipment is required to recirculate the molten melting media.

U.S. Patent 4,128,415 illustrates another system for reclaiming scrap wherein the melting media is drawn up into a bay where a metal scrap is melted. Further, U.S. Patent 3,997,336 discloses a system where melting media and metal scrap are introduced into a bay and the scrap is forcibly submerged using an axial flow impeller.

With respect to the scalping chips, or scrap which may be characterized as flowable, for example, such as filings and cuttings or even large pieces, these can present difficulty in submerging as does the above-mentioned container scrap. Nevertheless, it is imperative that such flowable scrap be melted and reclaimed in the most efficient manner in order to provide an incentive to operate a remelting system as a source of metal, as compared to the established manufacturing system for producing such metal.

With highly oxidizable metals, such as aluminum, out of which the aforementioned containers and beverage cans are often made, it is important to provide a remelting system which provides maximum heat transfer for efficient melting. Also, it is important that the metal scrap be submerged with minimum turbulence at the melting media surface in order to minimize oxidation of the molten metal. Oxidation leads to skim formation, a problem inherent in most systems reclaiming highly oxidizable metals such as aluminum.

The skim referred to includes the metal oxide, e.g. $Al_2O_3$, and molten metal which becomes entrained in such oxide. Skim is undesirable and, therefore, should be minimized not only because of the molten metal lost to it, but also because it can cause problems by acting as an insulator in the heating bay. That is, when combustion units discharging their heat on the surface of the molten media in the heating bay are used, skim floating on the surface thereof makes it difficult to heat the molten media. Also, such floating skim by rejecting heat can seriously shorten the useful life of the equipment by causing it to overheat.

The present invention provides a highly efficient method of recirculating molten melting media and for reclaiming metal scrap in a recirculating melting system. The method is suitable for reclaiming either flowable or non-flowable scrap of the type referred to above.

According to the present invention there is provided a method of melting metal scrap in a molten melting media, comprising the steps of:

(a) providing a body of molten melting media (74) in a housing having an upper portion (78) and a lower portion (76);

(b) adding a supply of metal scrap (72) to said housing;

(c) introducing a supply of molten melting media (74) to the upper portion (78) of the housing; and

(d) initiating melting of the metal scrap (72) by ingesting it and molten melting media (74) downwardly in said housing by action of an impeller (73) positioned in the lower portion (76), characterized by the impeller (73) having a flat member (90) having a circular opening in the center thereof and having blade (94) extending from said member (90) to a bottom plate which is a substantially circular disc member (92), the scrap (72) and melting media (74) entering the opening in the member (90) in an axial direction and being propelled therefrom in a radial direction by use of said blades (94), the impeller (73) positioned in the lower portion (76) such that at least said flat member (90) cooperates with the lower portion (76) to move the scrap (72) and melting media (74) from the upper portion (78) through said impeller (73) while substantially avoiding recirculation of the molten melting media (74) within said housing to the upper portion (78).

In the drawings:

Figure 1 is a plan view showing a general schematic of a circulatory system in accordance with the present invention.

Figure 2 is a plan view of a hot chamber and cold chamber in the recirculating melting system.

Figure 3 is an elevational view in cross-section illustrating a pumping and scrap charging bay in accordance with the invention.

Figure 4 is an elevational view in cross-section through the pumping bay showing molten entrance and exit channels.

Figure 5 is a top view of a pumping bay in accordance with the invention.

Figure 6 is a pictorial view of the impeller in Figure 4.

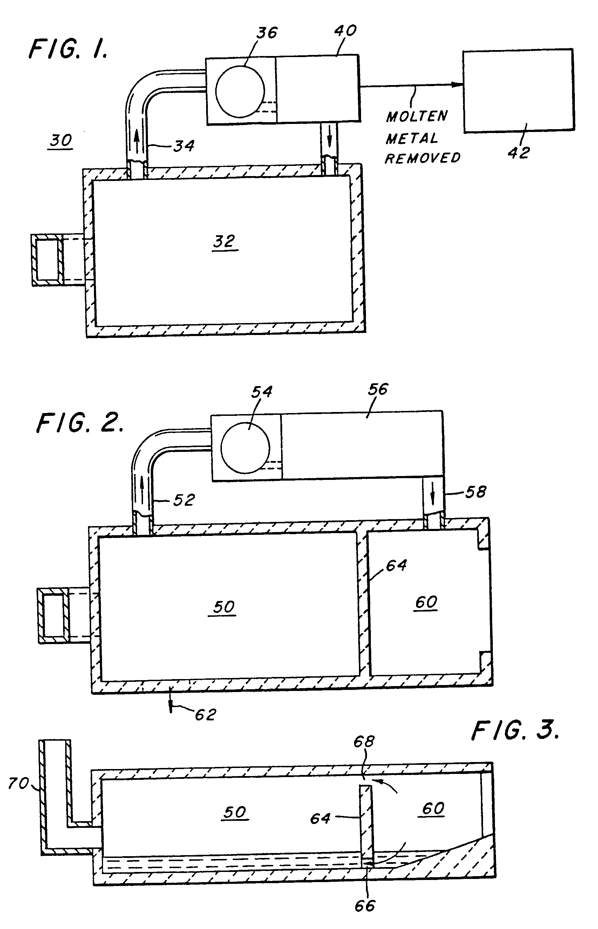

Referring now more specifically to Figure 1, there is shown a schematic of a recirculating scrap melting system 30 in accordance with the present invention. In the recirculating melting system, melting media is circulated from heating bay or hot chamber 32 via conduit 34 to pumping and scrap charging bay 36. In bay 36, molten melting media, e.g. molten metal or molten aluminum, is drawn thereinto and scrap can be ingested thereinto by action of a pump impeller located in the bay. The molten melting media and ingested scrap are discharged or propelled from the bay into a skim bay 40, for example, for treatment or removal of skim or dross before being discharged from the system or passed into a holding furnace 42. It will be appreciated that molten metal can be removed from the system at a rate commensurate with the rate at which scrap is added.

The melting media, such as molten aluminum, can be heated by use of burners such as combustion units located in hot bay 32 or electrical heaters such as induction or resistance heaters immersed in the molten metal.

The melting media can be molten metal of similar composition to the metal charge or it may be a molten salt. If a molten salt is used, a salt-metal separation would normally be necessary to facilitate the removal of the melted metal. When molten aluminum is the melting media, a typical temperature leaving the heating bay 32 can be about 760°C (1400°F) although this temperature can range from 718 to 802°C (1325 to 1475°F), but with a higher temperature there is a greater tendency to form skim. A typical temperature reentering heating bay 32 can be about 676 to 704°C (1250 to 1300°F) or even slightly lower without fear of solidification. This provides about a 55.6°C (100°F) temperature drop across the melting bay to provide heat to melt the charge. However, it should be noted that this temperature drop depends somewhat on charge rates and circulation rates. For example, the charge rates and circulation rates can be such that the temperature drop would only be 11°C (20°F).

Referring now to Figure 2, there is shown another schematic of a recirculating system in accordance with the present invention. In this embodiment, melting media is circulated from hot chamber 50 via line 52 by action of an impeller in pump bay 54. Melting media can be discharged into a skim removal bay 56 and there via line 58 to a cold chamber 60 where scrap to be melted can be charged. Molten metal can be removed at 62 at a rate commensurate with the rate of scrap charging, if desired. Cold chamber 60 can be separated from hot chamber 50 by a wall 64 (see Figure 3). The wall can have an opening 66 therein to pass molten metal from the cold bay to the hot bay. If the scrap is of the type which has coatings such as oil thereon, the fumes resulting therefrom can pass or be removed through opening 68 to the hot bay from which they can be removed from the system through channel 70 for treating or being burned therein. Hot chamber may be heated as noted above.

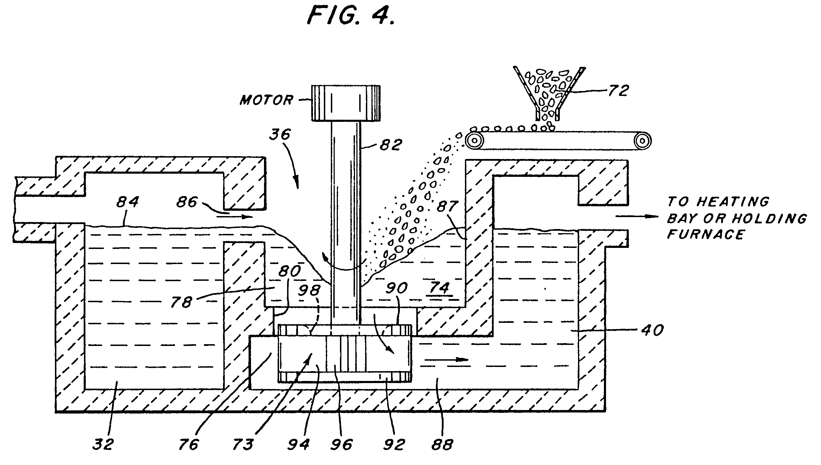

Referring now to Figure 4, there is shown an elevational cross-sectional view of bay 36 (Figure 1) which permits charging of metal scrap 72 thereinto which is ingested into molten melting media 74. That is, impeller 73 serves to circulate the molten melting media from the hot bay through the pumping and scrap charging bay to a skim removal bay and hence to the hot bay or a holding furnace. Impeller 73 has a configuration which requires the molten metal and scrap to be melted to be ingested downwardly in an axial direction into the impeller and expelled or propelled therefrom radially. Having the melting media and charge change direction in the impeller can result in greater melting efficiency. Thus, in Figure 4, it will be seen that molten melting media is drawn from bay 32 through bay 36 and propelled through opening 88 into skim bay 40.

In order that the molten melting media be circulated efficiently, it is important that impeller 73 be positioned precisely in lower portion 76 of bay 36. That is, in order that impeller 73 draws the molten melting media downwardly in an axial direction and moves it into skim bay 40, the melting media, after having passed through impeller 73, cannot be permitted to recirculate into upper portion 78 of the bay. It will be understood that to permit substantial amounts of melting media to return from lower portion 76 to the upper portion 78 results in the pumping or recirculating action being adversely affected. By a "substantial amount" is meant an amount greater than may unavoidably escape through or around the fitting between the impeller and the wall section 80 in lower portion 76. It will be understood that if the impeller is merely placed in an open bay, it will function as a mixer rather than circulating mechanism.

Lower housing at sidewall 80 can be substantially circular to fit and cooperate with impeller 73 to pump molten melting media. However, sidewall 80 may be shaped to provide an opening other than circular which can be shaped to cooperate with impeller 73 positioned therein to minimize the amount of molten metal escaping to the upper portion.

In Figure 4, it will be seen that impeller 73 is carried on a shaft 82. Further, it will be observed that impeller 73 is fitted into lower portion 76 with a tolerance being provided at least between lower housing 76 at sidewall 80 and the top of the impeller to prevent or minimize the amount of molten melting media that may escape therebetween. Thus, in operation, impeller 73, as well as recirculating melting media, continuously depletes and replenishes the melting media in bay 36, the depletion rate being commensurate with the rate at which melting media and scrap are added to the bay.

An impeller and its position in lower portion 76, which has been found to be suitable for this operation, is shown in Figures 4, 5 and 6. Further, in Figure 4, it will be observed that melting media can be introduced to bay 36 through an opening 86, which for purposes of the present invention may be placed below level 84 of the melting media but above impeller 73. In addition, for purposes of expelling material radially from impeller 73, a channel or opening 88 must be provided in lower portion 76, as shown in Figure 4, for example.

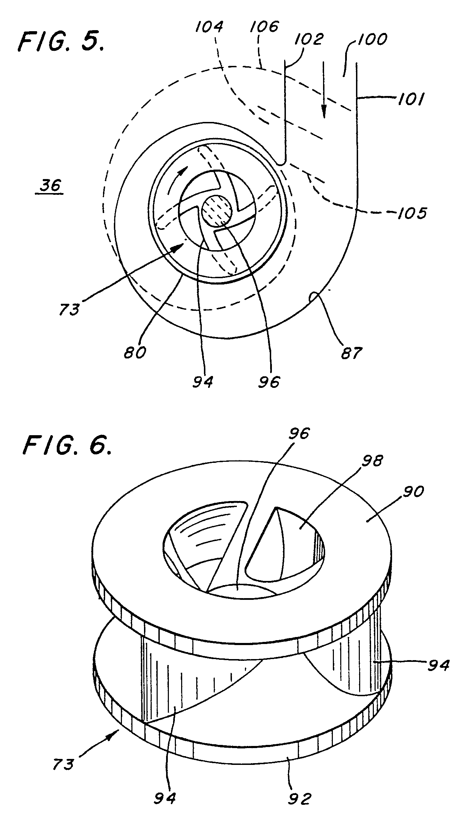

From Figures 4 and 6, it will be noted that impeller 73 has a top, flat circular ring member 90 and a bottom plate which is a flat circular disc membe 92. Between ring member 90 and disc member 92, blades 94 extend in a generally radial direction from a central hub 96. Hub 96 provides means by which the impeller may be joined or carried on shaft 82. With the shaft joined to impeller 73, ring 90 provides or defines openings 98 with blades 94 through which the molten metal or melting media is drawn and from which molten material is expelled radially into opening 88.

It will be understood that means may be added to the top ring 90 to permit it to cooperate with sidewall 80 to restrict the amount of melting media which may recirculate to the upper portion of the housing. That is, it will be understood that when ring member 90, for example, overlaps sidewall 80, the sidewall overlap may be circular or some other shape which does not permit recirculation of the molten material in the housing.

In a preferred aspect of the invention, wall 87 of bay 36 may have a configuration, as shown in Figure 5, to facilitate flow of molten melting media through impeller 73. That is, bay 36 is arranged to provide a spiral shaped flow pattern to molten metal entering the upper portion and leaving the lower portion. Thus, in Figure 5 molten metal enters the upper portion along channel 100 which has sides 101 and 102. It will be noted that impeller 73 is placed in the lower portion 76 and is placed within circular wall section 80. Wall 101 continues in a circular pattern which may be described as one which has a decreasing radius until it meets side 102. This configuration is useful in its effectiveness in directing molten melting media through the impeller. When the melting media passes through the impeller, it is preferred that a channel or conduit be used that opens into an exit 104 having sides 105 and 106 with side 106 which is generally circular and may be described as a circle having an increasing diameter until it becomes more or less parallel to side 105.

In operation, the present system is capable of pumping as much as 453600 kg/hr (one million pounds per hour) of molten metal or melting media at an rpm of 100 to 140. This rate of pumping may be achieved with an impeller having about a 50.8 cm (20 inch) diameter and having blades approximately 15.2 cm (six inches) in height. The band of ring member 90 may be about 12.7 cm (five inches) in width.

In the present system, materials of construction of bay 36 can be any material suitably resistant to erosion or corrosion by molten aluminum or molten salts. Such materials include silicon carbide or any other refractory normally used with molten aluminum. With respect to the impeller, since dimensions can be relatively imprecise when compared to pumps normally used to pump molten metals, e.g. no seals, etc., the impeller and shaft can be cast. Alternatively, if the fabricating material is graphite, the impeller assembly can be machined. Preferably, the impeller 73 is fabricated from a refractory material comprising a zinc borosilicate frit. A particularly suitable zinc borosilicate frit is described in U.S. Patent 4,088,502, hereby incorporated by reference.

## Claims

1. A method of melting metal scrap in a molten melting media, comprising the steps of:

(a) providing a body of molten melting media (74) in a housing having an upper portion (78) and a lower portion (76);

(b) adding a supply of metal scrap (72) to said housing;

(c) introducing a supply of molten melting media (74) to the upper portion (78) of the housing; and

(d) initiating melting of the metal scrap (72) by ingesting it and molten melting media (74) downwardly in said housing by action of an impeller (73) positioned in the lower portion (76), characterized by the impeller (73) having a flat member (90) having a circular opening in the center thereof and having blades (94) extending from said member (90) to a bottom plate which is a substantially circular disc member (92), the scrap (72) and melting media (74) entering the opening in the member (90) in an axial direction and being propelled therefrom in a radial direction by use of said blades (94), the impeller (73) positioned in the lower portion (76) such that at least said flat member (90) cooperates with the lower portion (76) to move the scrap (72) and melting media (74) from the upper portion (78) through said impeller (73) while substantially avoiding recirculation of the molten melting media (74) within said housing to the upper portion (78).

2. A method in accordance with claim 1, characterized in that the metal scrap (72) is aluminum or alloys thereof.

3. A method in accordance with claim 1 or 2, characterized in that the melting media (74) is selected from molten salts and molten metal.

4. A method in accordance with any one of the preceding claims, characterized in that the melting media (74) comprises molten aluminum.

5. A method in accordance with any one of the preceding claims, characterized in that the lower portion (76) has a generally cylindrical wall section (80).

6. A method according to any one of claims 1 to 4, which comprises melting the scrap (72) in a recirculating system (30) having at least a heating bay (32) and a pumping bay (36), the method comprising the steps of:

(a) providing a body of molten melting media (74) in said pumping bay housing having an upper portion and a lower portion, both portions having a generally cylindrical wall section;

(b) flowing molten melting media (74) into said upper portion in a direction which is substantially tangential with respect to said housing; characterized by

(c) ingesting molten melting media (74) downwardly in said housing as in step (d) of claim 1 by action of said impeller (73) positioned in the lower portion; and

(d) flowing the melting media away from the lower portion after exiting said impeller (73) such that a substantial spiral shaped flow pattern is established through the housing.

7. A method according to claim 5, which comprises melting the metal scrap (72) in a recirculating system, the method comprising the steps of:

(a) providing a heating bay (50), a pumping bay (54) having an upper and lower portion and a scrap charging bay (60);

(b) charging scrap (72) to feed the charging bay (60) to initiate melting of feed scrap (72) therein; and

(c) circulating molten media (74) from the heating bay (50) through the pumping bay (54) to the scrap charging bay (60) and back to the heating bay (50), characterized by the molten melting media (74) being recirculated by action of said impeller positioned in the lower portion of the pumping bay (54).

**Patentansprüche**

1. Verfahren zum Schmelzen von Metallabfall in einem geschmolzenen Schmelzmedium mit folgenden Schritten:

(a) Einbringen einer Masse von geschmolzenem Schmelzmedium (74) in ein Gehäuse mit einem oberen Teil (78) und einem unteren Teil (76);

(b) Zugabe von Metallabfall (72) in das Gehäuse;

(c) Einbringen von geschmolzenem Schmelzmedium (74) in den oberen Teil (78) des Gehäuses; und

(d) Einleiten des Schmelzens des Metallabfalls (72), indem dieser und das geschmolzene Schmelzmedium (74) mit Hilfe eines im unteren Teil (76) angeordneten Laufrades (73) im Gehäuse nach unten geleitet wird, dadurch gekennzeichnet, daß das Laufrad (73) ein flaches Teil (90) aufweist, das in seiner Mitte eine kreisrunde Öffnung besitzt und Schaufeln (94) hat, die sich von dem besagten Teil (90) zu einer Bodenplatte erstrecken, die ein im wesentlichen kreisförmiges Scheibenteil (92) ist, wobei der Metallabfall (72) und das Schmelzmedium (74) in axialer Richtung in die Öffnung in dem Teil (90) eintreten und mit Hilfe der Schaufeln (94) in radialer Richtung davon weggeschleudert werden, wobei das Laufrad (73) im unteren Teil (76) so angeordnet ist, daß wenigstens das flache Teil (90) mit dem unteren Teil (76) zusammenwirkt, um den Metallabfall (72) und das Schmelzmedium (74) vom oberen Teil (78) durch das Laufrad (73) zu bewegen, während ein Rücklauf des geschmolzenen Schmelzmediums (74) in dem Gehäuse zu dem oberen Teil (78) im wesentlichen vermieden wird.

2. Verfahren nach Anspruch 1, dadurch gekennzeichnet, daß der Metallabfall (72) ALuminium ist oder Legierungen desselben.

3. Verfahren nach Anspruch 1 oder 2, dadurch gekennzeichnet, daß das Schmelzmedium (74) ausgewählt ist aus geschmolzenen Salzen und geschmolzenem Metall.

4. Verfahren nach einem der vorhergehenden Ansprüche, dadurch gekennzeichnet, daß das Schmelzmedium (74) geschmolzenes Aluminium umfaßt.

5. Verfahren nach einem der vorhergehenden Ansprüche, dadurch gekennzeichnet, daß der untere Teil (76) einen im allgemeinen zylindrischen Wandabschnitt (80) besitzt.

6. Verfahren nach einem der Ansprüche 1 bis 4, bei dem der Metallabfall (72) in einem Umlaufsystem (30) geschmolzen wird, das wenigstens einen Heizbereich (32) und einen Pumpbereich (36) besitzt, wobei das Verfahren folgende Schritte umfaßt:

(a) Einbringen einer Masse von geschmolzenem Schmelzmedium (74) in das Gehäuse des Pumpbereichs mit einem oberen Teil und einem unteren Teil, wobei beide Teile einen im allgemeinen zylindrischen Wandabschnitt besitzen;

(b) Einfließen von geschmolzenem Schmelzmedium (74) in den oberen Teil in einer Richtung, die im wesentlichen tangential zu dem Gehäuse verläuft; dadurch gekennzeichnet,

(c) daß das geschmolzene Schmelzmedium (74) wie in Schritt (d) von Anspruch 1 mit Hilfe des im unteren Teil angeordneten Laufrades (73) in dem Gehäuse nach unten geleitet wird; und

(d) daß das Schmelzmedium nach dem Austritt aus dem Laufrad (73) von dem unteren Teil wegfließt, so daß eine im wesentlichen spiralförmige Strömung durch das Gehäuse entsteht.

7. Verfahren nach Anspruch 5, bei dem der Metallabfall (72) in einem Umlaufsystem geschmolzen wird, mit folgenden Schritten:

(a) Anordnen eines Heizbereichs (50), eines Pumpbereichs (54) mit einem oberen und einem unteren Teil, und eines Metallabfalleinfüllbereichs (60);

(b) Einfüllen des Metallabfalls (72) in den Einfüllbereich (60), um das Schmelzen des eingefüllten Metallabfalls (72) darin einzuleiten; und

(c) Bewegen des geschmolzenen Schmelzmediums (74) vom Heizbereich (50) durch den Pumpbereich (54) zu dem Metallabfalleinfüllbereich (60) und zurück zum Heizbereich (50), dadurch gekennzeichnet, daß das geschmolzene Schmelzmedium (74) mit Hilfe des im unteren Teil des Pumpbereichs (54) angeordneten Laufrades umgewälzt wird.

## Revendications

1. Procédé de fusion de déchets métalliques dans un milieu de fusion fondu, comprenant les étapes de:

(a) disposer un corps de milieu de fusion fondu (74) dans une enceinte ayant une partie supérieure (78) et une partie inférieure (76);

(b) ajouter un apport de déchets métalliques (72) dans ladite enceinte;

(c) introduire un apport de milieu de fusion fondu (74) dans la partie supérieure (78) de l'enceinte; et

(d) amorcer la fusion des déchets métalliques (72) par entraînement de ceux-ci et du milieu de fusion fondu (74) vers le bas dans ladite enceinte par l'action d'une turbine (73) située dans la partie inférieure (76), caractérisé en ce que la turbine (73) comporte un élément plat (90) présentant une ouverture circulaire en son centre et des pales (94) qui s'étendent depuis ledit élément (90) jusqu'à une plaque de fond qui est un élément sous forme de disque sensiblement circulaire (92), les déchets métalliques (72) et le milieu de fusion (74) pénétrant dans l'ouverture de l'élément (90) en direction axiale et étant projetés depuis celle-ci dans une direction radiale au moyen desdites pales (94), la turbine (73) étant située dans la partie inférieure (76) de telle façon qu'au moins ledit élément plat (90) coopère avec la partie inférieure (76) pour déplacer les déchets métalliques (72) et le milieu de fusion (74) depuis la partie supérieure (78) à travers ladite turbine (73) tout en évitant sensiblement une recirculation du milieu de fusion fondu (74) dans ladite enceinte jusqu'à la partie supérieure (78).

2. Procédé selon la revendication 1, caractérisé en ce que les déchets métalliques (72) sont constitués par de l'aluminium ou des alliages de celui-ci.

3. Procédé selon la revendication 1 ou 2, caractérisé en ce que le milieu de fusion (74) est choisi parmi des sels fondus et un métal fondu.

4. Procédé selon l'une quelconque des revendications précédentes, caractérisé en ce que le milieu de fusion (74) comprend de l'aluminium fondu.

5. Procédé selon l'une quelconque des revendications précédentes, caractérisé en ce que la partie inférieure (76) a une section de paroi (80) généralement cylindrique.

6. Procédé selon l'une quelconque des revendications 1 à 4, qui comprend la fusion des déchets métalliques (72) dans un système à recirculation (30) ayant au moins un compartiment de chauffage (32) et un compartiment de pompage (36), le procédé comprenant les étapes de:

(a) disposer un corps de milieu de fusion fondu (74) dans ladite enceinte du compartiment de pompage ayant une partie supérieure et une partie inférieure, les deux parties ayant une section de paroi généralement cylindrique;

(b) faire s'écouler le milieu de fusion fondu (74) dans ladite partie supérieure dans une direction qui est sensiblement tangentielle à ladite enceinte; caractérisé par

(c) l'entraînement du milieu de fusion fondu (74) vers le bas dans ladite enceinte comme dans l'étape (d) de la revendication 1 par l'action de ladite turbine (73) située dans la partie inférieure; et

(d) l'écoulement du milieu de fusion depuis la partie inférieure après qu'il ait quitté ladite turbine (73) de façon qu'il s'établisse dans l'enceinte une configuration d'écoulement ayant sensiblement la forme d'une spirale.

7. Procédé selon la revendication 5, qui comprend la fusion des déchets métalliques (72) dans un système à recirculation, le procédé comprenant les étapes de:

(a) disposer un compartiment de chauffage (50), un compartiment de pompage (54) ayant une partie supérieure et une partie inférieure et un compartiment (60) de chargement des déchets métalliques;

(b) charger les déchets métalliques (72) pour alimenter le compartiment de chargement (60) pour amorcer la fusion dans celui-ci des déchets métalliques d'alimentation (72); et

(c) faire circuler le milieu fondu (74) depuis le compartiment de chauffage (50) à travers le compartiment de pompage (54) jusqu'au compartiment (60) de chargement des déchets métalliques et de nouveau jusqu'au compartiment de chauffage (50), caractérisé en ce que le milieu de fusion fondu (74) est amené à recirculer par l'action de ladite turbine située dans la partie inférieure du compartiment de pompage (54).

FIG. 1.

FIG. 2.

FIG. 3.

MOLTEN
METAL
REMOVED

1

FIG. 4.

FIG. 5.

FIG. 6.